# DEMANDE DE BREVET EUROPEEN

(11) **EP 4 778 967 A1**
(43) Date de publication de la demande: **22.07.2026**
(21) Numéro de dépôt: 26151605.8
(22) Date de dépôt: 13.01.2026
(51) Int. Cl.: C08J 11/08, B29B 17/00

(54) **PROCÉDÉ DE RECYCLAGE DE MEMBRANES IONOMÈRES D'ACIDE PERFLUOROSULFONIQUE PAR DISPERSION**

(30) Priorité: 15.01.2025 FR 2500409
(71) Demandeur: Commissariat à l'Energie Atomique et aux Energies Alternatives, 75015 Paris (FR); Centre National de la Recherche Scientifique, 75016 Paris (FR); Université de Montpellier, 34090 Montpellier (FR); Ecole Nationale Supérieure de Chimie de Montpellier, 34296 Montpellier Cedex 5 (FR)
(72) Inventeur: FERNANDEZ RODAS, Ana-Carolina, 38054 Grenoble cedex 09 (FR); PILUSO, Pierre, 38054 Grenoble cedex 09 (FR); MENDIL-JAKANI, Hakima, 38054 Grenoble cedex 09 (FR); GEBEL, Gérard, 38054 Grenoble cedex 09 (FR); LEPRE, Luiz-Fernando, 38054 Grenoble cedex 09 (FR); AMEDURI, Bruno, 34090 Montpellier (FR)
(74) Mandataire: Gevers & Orès

(57) **Abrégé**

L'invention concerne un procédé de recyclage des membranes ionomères d'acide perfluorosulfonique (PFSA) utilisées dans diverses applications, comme pour la conversion et le stockage de l'énergie (piles à combustible à membrane échangeuse de protons ou PEMFC, batteries à flux redox), la production d'hydrogène (électrolyseurs d'eau), l'industrie du chlore et des alcalis, et les technologies de diagnostic médical.

Le procédé de l'invention comprend une étape qui consiste à disperser la membrane dans un liquide ionique dans certaines conditions de température et de temps et de récupérer l'ionomère afin de reconstituer une membrane conductrice protonique.

## Description

### Domaine technique de l'invention

L'invention concerne un procédé de recyclage des membranes ionomères d'acide perfluorosulfonique (PFSA) utilisées dans diverses applications, comme pour la conversion et le stockage de l'énergie (piles à combustible à membrane échangeuse de protons ou PEMFC, batteries à flux redox), la production d'hydrogène (électrolyseurs d'eau), l'industrie du chlore et des alcalis, et les technologies de diagnostic médical.

Le procédé de l'invention comprend une étape qui consiste à disperser la membrane dans un liquide ionique dans certaines conditions de température et de temps. L'ionomère récupéré peut être utilisé pour reconstituer une membrane conductrice protonique.

Le procédé de l'invention permet d'éviter l'utilisation des solvants organiques inflammables, notamment des alcools, dont la décomposition peut être catalysée par la présence nanoparticules de Pt (Pt-NPs) qui ont pu se dissoudre, migrer et se précipiter dans la membrane lors du fonctionnement de la PEMFC, provoquant ainsi une explosion.

### Arrière-plan technique

Dans le but de réduire les émissions de gaz à effet de serre et rebondir quant à la raréfaction des énergies fossiles, il faut trouver des alternatives. Les technologies de stockage d'hydrogène d'une part et de conversion en électricité d'autre part, les piles à combustible à membrane échangeuse de protons ou PEMFC pour Proton Exchange Membrane Fuel Cell en anglais, représentent une solution prometteuse pour permettre l'utilisation de l'hydrogène en tant que vecteur de stockage d'énergie produite à partir de sources renouvelables.

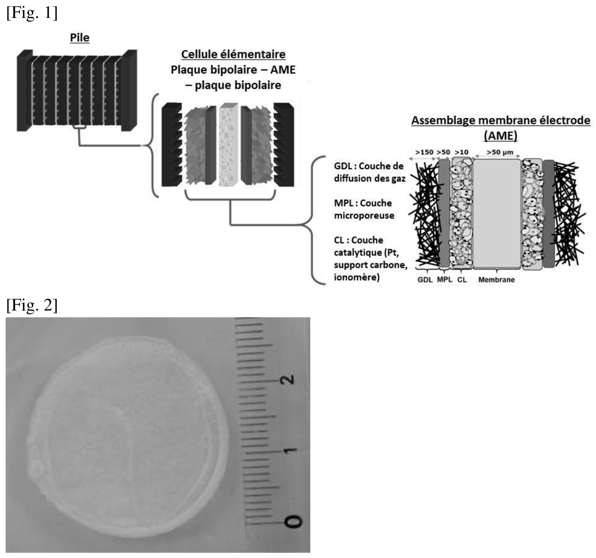

Les piles de type PEFMC permettent de convertir une énergie électrochimique d'oxydoréduction via la conversion d'hydrogène (H₂) et d'oxygène (O₂) en énergie électrique, en eau et en chaleur. Plusieurs cellules doivent être empilées afin d'obtenir une tension optimale. Chaque cellule est composée de plaques bipolaires, plaques d'extrémité et des assemblages membranes électrodes (AME). L'AME est constitué de différentes couches : les couches de diffusion de gaz ou GDL (pour Gaz Diffusion Layer en anglais) qui assurent la répartition homogène des gaz sur la surface des électrodes et les couches catalytiques, où se déroulent les réactions électrochimiques à l'aide du catalyseur (Pt), et qui composent l'anode et la cathode. L'élément central est la membrane qui sert d'électrolyte et qui sépare l'anode de la cathode comme montré en [Fig.1].

La membrane est généralement un ionomère perfluorosulfonique comme le Nafion^{®}, commercialisé par Chemours, et composée d'une chaîne linéaire polytétrafluoroéthylè ne (PTFE) extrêmement hydrophobe de par la présence de groupements CF₂, sur lesquelles sont présentes des chaînes pendantes d'éthers perfluorées auxquelles sont attachées des ions sulfonates SO₃-H⁺ qui permettent la conduction protonique. D'autres membranes d'acide perfluorosulfonique (PFSA) ont également été développées avec différents longueurs et nature de chaîne latérale d'acide sulfonique (Flemion^{®}, 3M, Aquivion^{®} et Hyflon^{®}, etc.) ou avec des renforts de PTFE (Gore-Select^{®}, Nafion^{®} XL).

Afin de rendre ces technologies rentables avec un faible impact environnemental et pour répondre à la durabilité économique à long terme des PEMFC sur le marché industriel, le recyclage de ses composants, en particulier du Pt et de la membrane qui représentent une partie significative du coût de la PEFMC est une nécessité. A ce jour, le recyclage du Pt à l'échelle industrielle est réalisé au moyen de procédés pyrométallurgiques et hydrométallurgiques (Duclos, L. et al., Process Development and Optimization for Platinum Recovery from PEM Fuel Cell Catalyst, Hydrometallurgy 2016, 160, 79-89 ; Jha, M. K. et al., Hydrometallurgical Recovery/Recycling of Platinum by the Leaching of Spent Catalysts: A Review, Hydrometallurgy 2013, 133, 23-32). Malgré leur efficacité ces procédés ont des inconvénients. Ils détruisent la membrane en raison des hautes températures et pression nécessaires et conduisent à l'émission des gaz toxiques lors de sa combustion. En outre, l'utilisation d'acides concentrés en milieu industriel impose des restrictions de sécurité sur les personnes et les équipements importantes pour permettre leur manipulation.

La membrane PFSA peut être recyclée par la dissolution dans un mélange eau/ solvants organiques (par exemple des alcools) comme décrits dans US7,255,798B2, WO2016/156815A1, US8,124,261B2, suivie d'une reconstitution de la membrane. Cependant, ces méthodes sont énergivores et posent des problèmes environnementaux (haute pression/température; émissions de composants nocifs : HF, COF₂, etc.). En outre, les membranes recyclées peuvent contenir des nanoparticules de Pt (ci-après Pt-NPs) provenant des résidus de la couche de catalyseur ou de phénomènes de dissolution, migration et précipitation des Pt-NPs pendant le fonctionnement de la PEMFC. Ces Pt-NPs peuvent catalyser la décomposition des alcools et provoquer une explosion.

Il existe donc un réel besoin de trouver de nouveaux procédés de recyclage de membranes PFSA plus rentables, plus sûrs et avec un faible impact environnemental.

### Résumé de l'invention

La présente invention a précisément pour but de répondre à ce besoin, en fournissant un procédé de recyclage de membranes ionomères d'acide perfluorosulfonique comprenant les étapes suivantes :
**1**) immerger, sous une atmosphère inerte, la membrane ionomère d'acide perfluorosulfonique dans un liquide ionique amphiphile (cation hydrophobe et anion hydrophile) dont
   le cation est choisi parmi
      - les 1-alkyl-3-méthylimidazoliums avec le radical alkyle ayant 8 à 14 atomes de carbone,
      - les tétraalkylphosphoniums de formule P(R₁R₂R₃R₄)⁺ dans laquelle R₁, R₂, R₃ et R₄, identiques ou différents, représentent un radical alkyle ayant 4 à 14 atomes de carbone,
      - les tributylalkylphosphoniums, avec le radical alkyle ayant 4 à 14 atomes de carbone,
      - les trihexylalkylphosphoniums, avec le radical alkyle ayant 4 à 14 atomes de carbone, et
   l'anion est choisi parmi Cl⁻, Br⁻, I⁻, BF₄⁻, PF₆⁻, TCM (tricyanométhanure ou C(CN)₃⁻) et OH⁻, de préférence Cl⁻, TCM⁻ et OH⁻, et plus préférentiellement OH⁻,
   et chauffer le mélange membrane/liquide ionique à une température comprise entre 150 et 200°C, de préférence entre 160 et 180°C, jusqu'à obtenir la dispersion de la membrane dans le liquide ionique ;
**2**) séparer l'ionomère d'acide perfluorosulfonique de la dispersion par précipitation en introduisant la dispersion dans un excès de solvant choisi parmi l'acétonitrile, l'acétate de butyle, et leur mélange ;
**3**) récupérer l'ionomère d'acide perfluorosulfonique solide précipité,
   éventuellement le laver avec le solvant de précipitation, et
   le sécher à une température comprise entre 20°C et 150°C ;
**4**) acidifier le l'ionomère d'acide perfluorosulfonique pour régénérer les fonctions SO₃H en l'introduisant dans une solution de 0,01 à 2M d'un acide minéral choisi parmi H₂SO₄, HCl, HNO₃, H₃PO₄et leur mélange ;
**5**) procéder au recuit de l'ionomère d'acide perfluorosulfonique récupéré à une température allant de 120 à 200°C.

Le procédé de l'invention propose le recyclage de membranes PFSA par dissolution dans un solvant autre que les solvants organiques (notamment une alternative aux alcools) pour faire face aux inconvénients des procédés précédemment mentionnés.

L'invention se base sur la capacité des PFSA à gonfler dans différents solvants et à se disperser dans certains cas en fonction des interactions qui se forment. Le procédé consiste à immerger les membranes PFSA dans un liquide ionique (LI) dans certaines conditions de température et de temps.

Le procédé de l'invention présente l'avantage de revaloriser des membranes PFSA comme le Nafion et les homologues, neuves ou en fin de vie, tout en minimisant les risques d'explosion et d'inflammabilité liées à la présence de résidus de platine au sein de la membrane.

Ce procédé permet aussi une plus faible consommation d'énergie car il n'y a pas de haute pression et la température est moins élevée que celles des procédés de recyclage typiquement utilisés, ce qui permet de limiter la dégradation des chaînes des ionomères et d'éviter le rejet de gaz toxiques.

Le procédé de l'invention permet en outre d'éviter l'utilisation des solvants organiques et d'acides pour la dissolution de la membrane, qui peuvent être dangereux pour l'homme et pour l'environnement.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig.1] représente un empilement (ou stack en anglais) d'une PEMFC.
[Fig.2] représente une membrane PFSA Nafion dispersée puis précipitée, et récupérée après filtration.

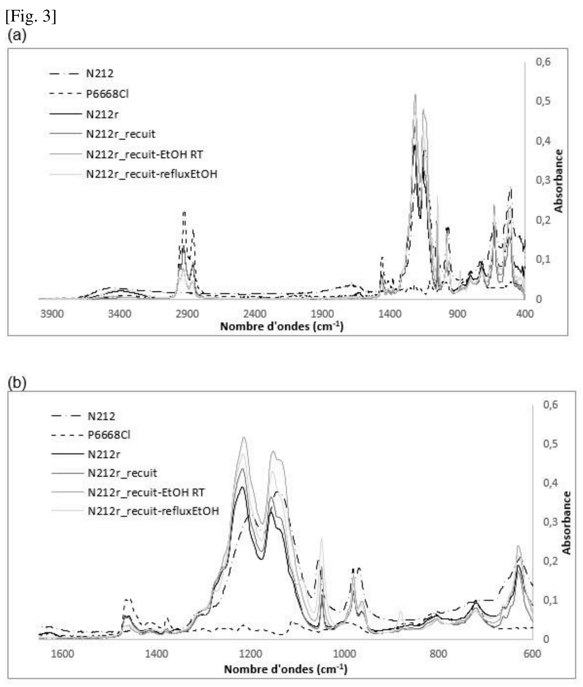

[Fig.3] représente (a) les spectres FTIR des membranes obtenues aux différents stades du procédé de l'invention et (b) zoom du spectre dans la gamme 600 à 1650 cm ⁻¹ (N212 : membrane Nafion 212 neuve, N212r : membrane Nafion 212 dispersée puis précipitée et filtrée, N212r_recuit : membrane après recuit à 150°C-2h, N212r_recuit-EtOH RT : membrane après recuit immergée dans l'éthanol à température ambiante (20 à 25°C) pendant 24h, N212r_recuit-refluxEtOH : membrane recuite après reflux dans l'éthanol pendant 20h).

### Description détaillée de l'invention

La présente invention concerne un procédé de recyclage de membranes ionomères d'acide perfluorosulfonique comprenant les étapes suivantes :
**1**) immerger, sous une atmosphère inerte, la membrane ionomère d'acide perfluorosulfonique dans un liquide ionique amphiphile (cation hydrophobe et anion hydrophile) dont
   le cation est choisi parmi
      - les 1-alkyl-3-méthylimidazoliums avec le radical alkyle ayant 8 à 14 atomes de carbone,
      - les tétraalkylphosphoniums de formule P(R₁R₂R₃R₄)⁺ dans laquelle R₁, R₂, R₃ et R₄, identiques ou différents, représentent un radical alkyle ayant 4 à 14 atomes de carbone,
      - les tributylalkylphosphoniums, avec le radical alkyle ayant 4 à 14 atomes de carbone,
      - les trihexylalkylphosphoniums, avec le radical alkyle ayant 4 à 14 atomes de carbone, et
   l'anion est choisi parmi Cl⁻, Br⁻, I⁻, BF₄⁻, PF₆⁻, TCM⁻ et OH⁻, de préférence Cl⁻, TCM⁻ et OH⁻, et plus préférentiellement OH⁻,
   et chauffer le mélange membrane/liquide ionique à une température comprise entre 150 et 200°C, de préférence entre 160 et 180°C, jusqu'à obtenir la dispersion de la membrane dans le liquide ionique ;
**2**) séparer l'ionomère d'acide perfluorosulfonique de la dispersion par précipitation en introduisant la dispersion dans un excès de solvant choisi parmi l'acétonitrile, l'acétate de butyle, et leur mélange ;
**3**) récupérer l'ionomère d'acide perfluorosulfonique précipité,
   éventuellement le laver avec le solvant de précipitation, et
   le sécher à une température comprise entre 20°C et 150°C ;
**4**) acidifier le l'ionomère d'acide perfluorosulfonique pour régénérer les fonctions SO₃H en l'introduisant dans une solution de 0,01 à 2M d'un acide minéral choisi parmi H₂SO₄, HCl, HNO₃, H₃PO₄et leur mélange ;
**5**) procéder au recuit de l'ionomère d'acide perfluorosulfonique récupéré à une température allant de 120 à 200°C.

Le procédé de recyclage de l'invention convient aussi bien aux membranes neuves qu'aux membranes vieillies après fonctionnement dans une PEMFC.

Le procédé de l'invention doit être précédée par la récupération de la membrane usée. Pour cela, il faut désassembler la PEMFC pour récupérer l'AME (Assemblage Membrane Electrode) et isoler la membrane par des procédés décrits dans l'état de la technique.

Au sens de la présente invention, on entend par « alkyle », un radical carboné linéaire, ramifié, saturé, éventuellement substitué, comprenant selon les cas 4 à 14 atomes de carbone ou 8 à 14 atomes de carbone. A titre d'alkyle saturé, linéaire ou ramifié, on peut citer par exemple les radicaux butyle, pentyle, hexyle, octyle, nonyle, décyle, undécyle, dodécanyle, tridécanyle, tétradécanyle, et leurs isomères ramifiés.

Le radical alkyle peut être éventuellement substitués par un ou plusieurs groupes alcoxy (-O-alkyle) ; un ou plusieurs atomes d'halogène choisis parmi les atomes de fluor, chlore, brome et iode ; avec alkyle tel que défini dans le cadre de la présente invention.

Le liquide ionique de l'invention est amphiphile (cation hydrophobe avec de longues chaînes alkyle comme décrit ci-dessus et anion hydrophile capable de créer des liaisons hydrogènes), et liquide à une température comprise entre 20°C et inférieure à 80°C sous la pression atmosphérique.

Les liquides ioniques viables pour le procédé de invention sont composés d'un cation avec de longues chaînes alkyles comme définis ci-dessus, conférant au liquide ionique un caractère très hydrophobe et un anion très hydrophile (Cl⁻, Br⁻, I⁻, BF₄⁻, PF₆⁻, TCM⁻ et OH⁻, de préférence Cl⁻, TCM⁻ et OH⁻, et plus préférentiellement OH⁻). Ces propriétés vont permettre au liquide ionique de s'imprégner et d'interagir avec toutes les phases des PFSA et conduire à sa dispersion.

Le cation est choisi parmi
les 1-alkyl-3-méthylimidazoliums choisis parmi 1-éthyl-3-méthylimidazolium (EMIM), 1-butyl-3-méthylimidazolium (BMIM), 1-hexyl-3-méthylimidazolium (HMIM), 1-octyl-3-méthylimidazolium (OMIM),1-décyl-3-méthylimidazolium (DMIM) ;
les tétraalkylphosphoniums choisis parmi [(C₄H₉)₃(C₁₄H₂₉)P]⁺, [(C₈H₁₇)₄P]⁺, [(C₆H₁₃)₃ (C₁₄H₂₉)P]⁺;
les tributylalkylphosphoniums choisis parmi tributyl(tétradécyl)phosphonium ;
les trihexylalkylphosphoniums choisis parmi trihexyl(octyl) phosphonium, trihexyl(tétradécyl)phosphonium.

Dans l'étape **1**), le temps d'immersion nécessaire à la dispersion varie de manière opposée avec la température et dépend du type de membrane utilisée et de la nature du liquide ionique utilisé, avec des temps pouvant varier de quelques minutes à plusieurs heures. Le temps d'immersion peut être de 10 minutes à 14 heures, de préférence inférieur ou égal à 8 heures. Dans un mode de réalisation de l'invention, le temps d'immersion est supérieur ou égal à 10 minutes et inférieur ou égal à 8 heures. Dans un autre mode de réalisation de l'invention, le temps d'immersion est 10 minutes à 4 heures.

Cette étape doit être réalisée préférentiellement sous atmosphère inerte (azote et/ou argon) pour éviter l'oxydation du liquide ionique avec l'air.

Après immersion dans les familles de liquides ioniques décrites ci-dessus, la membrane gonflée s'imprègne rapidement de liquide ionique grâce aux fortes interactions qui se forment entre eux. Les PFSA étant des matériaux multiphasiques, présentant un caractère amphiphile (très hydrophobe avec les chaînes polytétrafluoroéthylène ou PTFE et très hydrophile avec les ions sulfonates), leur gonflement sera fortement lié à la nature de l'anion et du cation du liquide ionique et des affinités entre les deux composants.

Dans l'étape **2**), l'ionomère d'acide perfluorosulfonique (PFSA) est récupéré du mélange par précipitation. Pour cela il faut choisir un solvant de précipitation qui possède une grande affinité avec le liquide ionique (miscibles complètement) et en même temps qu'il soit un anti-solvant du PFSA et qui n'interagit pas très fortement avec le PFSA. Le solvant est choisi parmi l'acétonitrile, l'acétate de butyle, le tétrahydrofurane, le carbonate de propylène, le cyclohexanone, le dioxane, l'hydrazine et leur mélange. La précipitation se fait de manière connue dans l'état de la technique, par exemple en versant un volume de liquide ionique contenant de l'ionomère dispersé dans 10 fois son volume, à température ambiante (20 à 25°C).

Dans l'étape 3), l'ionomère d'acide perfluorosulfonique précipité peut être récupéré par filtration et séché pour enlever tout le solvant résiduel.

Préalablement au séchage, l'ionomère d'acide perfluorosulfonique peut être lavé une ou plusieurs fois, par exemple 1 à 3 fois, avec le même solvant utilisé pour la précipitation. La quantité de solvant utilisé pour le lavage est de 1 à 100 ml par gramme de PFSA.

Le(s) lavage(s) est/sont suivi(s) de séchage, de manière à enlever le liquide ionique possiblement piégé dans le l'ionomère d'acide perfluorosulfonique précipité .

Le séchage peut avoir lieu sous un vide allant de la pression atmosphérique à 1 mbar.

L'étape **4**) d'acidification est connue dans l'état de la technique. Elle permet d'éliminer les cations de liquide ionique associés aux groupes sulfoniques par échange protonique.

Plus particulièrement, l'action de cette étape est de modifier les cations associés aux groupements SO₃⁻ du Nafion (SO₃H initialement), de SO₃⁻C⁺ (après immersion dans le liquide ionique), à SO₃H.

Dans l'étape **4**), 1 à 100 ml de solution acide par gramme de PFSA est utilisé. La température d'acidification est de 20 à 80°C. Le temps d'acidification est de 1 minute à 24 heures.

L'acidification peut être suivie d'un ou de plusieurs rinçages à l'eau pour éliminer l'excès d'acide.

L'ionomère d'acide perfluorosulfonique récupéré se caractérise par une absence de perte de masse équivalente et par une non dégradation de sa structure chimique (observée en FTIR). La présence résiduelle de liquide ionique dans l'ionomère d'acide perfluorosulfonique récupéré peut être considérée comme un avantage dans l'état de la technique car les liquides ioniques imprégnés dans l'ionomère participent à sa stabilisation en température (>80°C).

La durée du recuit dans l'étape **5)** est de 30 minutes à 6 heures.

L'ionomère d'acide perfluorosulfonique peut ensuite être utilisé pour reformer une membrane par évaporation de solvant en commençant par le disperser dans un mélange de solvants évaporable (typiquement un mélange d'éthanol et d'eau) selon des méthodes connues de la littérature. L'ionomère d'acide perfluorosulfonique peut être également utilisé en dispersion comme encre catalytique. Pour une utilisation en tant que membrane, il est important de procéder à des recuits afin de renforcer la mécanique de la membrane et récupérer sa morphologie, assurant ses propriétés de conductivité. Les membranes obtenues ont des propriétés de conductivité protonique proches de celle des membranes initiales.

### EXEMPLES

### Exemple de réalisation 1:

0,5 g de membrane PFSA Nafion 117 (produit par Chemours^{™}, et fourni par Fuel Cell Store), stockée à température ambiante (20 à 25°C) est plongée dans 3,1g de liquide ionique chlorure de trihexyl(octyl) phosphonium (P₆₆₆₈Cl, 95%, abcr GmbH). Le tout est ensuite chauffé à 190°C sous flux d'azote et agitation magnétique pendant 7h jusqu'à obtenir un milieu visuellement homogène.

Le mélange est ensuite versé dans un bécher contenant 30 ml d'acétate de butyle (99%, Sigma-Aldrich) sous forte agitation et à température ambiante. Le Nafion précipité formé est filtré sur filtre PTFE et lavé trois fois à l'éthanol (99%, Sigma-Aldrich) pendant 1h, 24h, 24h, et séché pendant 1h à 60°C après chaque lavage. Le Nafion précipité est ensuite acidifié dans une solution 1M de HCl (préparée à partir d'HCl 37%, Sigma-Aldrich, dilué dans l'eau déionisée) pendant 4h et rincé trois fois à l'eau distillée, puis il est séché sous flux d'azote pendant une nuit.

### Exemple de réalisation 2:

0,92 g de membrane PFSA Nafion 212 (produit par Chemours^{™}, et fourni par Fuel Cell Store), stockée à température ambiante (20 à 25°C) est plongée dans 13,5 g de liquide ionique chlorure de trihexyl(octyl) phosphonium (P₆₆₆₈Cl, 95%, abcr GmbH). Le tout est ensuite chauffé à 160°C durant 1 nuit sous agitation mécanique jusqu'à obtenir un milieu visuellement homogène.

Le mélange est ensuite versé dans 135 ml d'acétate de butyle (99%, Sigma-Aldrich) sous agitation mécanique à température ambiante et laissé sous agitation 1h, puis laissé à 4°C durant 24h. Le Nafion précipité obtenu est ensuite filtré sur un filtre PTFE (porosité de 0,45 µm, Fisherbrand^{™}, fourni par FisherScientific). Le solide filtré est ensuite récupéré et analysé en FTIR en mode ATR (réflectance totale attenuée) sur un spectromètre Bruker Invenio R. Le spectre obtenu ne diffère pas d'un Nafion neuf, hormis la présence de bandes liées au liquide ionique utilisé.

La membrane ainsi formée après filtration est encore peu stable, et se redisperse facilement dans l'éthanol (99%, Sigma-Aldrich) à chaud (reflux).

La membrane est ensuite acidifiée dans une solution 1M de HCl (préparée à partir d'HCl 37%, Sigma-Aldrich, dilué dans l'eau déionisée) pendant 4h et rincée trois fois à l'eau distillée. La membrane obtenue est ensuite recuite à 150°C pendant 2h. Après ce recuit, la membrane ne se disperse plus dans l'éthanol à reflux. Une analyse FTIR de la membrane après reflux dans l'éthanol durant 20h permet d'observer l'élimination partielle du liquide ionique résiduel (réduction des bandes associées au liquide ionique).

### Exemple de réalisation 3:

0,5 g de membrane PFSA Nafion 117 (produit par Chemours^{™}, et fourni par Fuel Cell Store), stockée à température ambiante (20 à 25°C) est plongée dans 3,1g de liquide ionique chlorure de trihexyl(tetradécyl) phosphonium (P₆₆₆₁₄Cl, 95%, Iolitec). Le tout est ensuite chauffé à 120°C sous flux d'azote et agitation magnétique pendant 8h jusqu'à obtenir un milieu visuellement homogène.

### Exemple de réalisation 4:

10g de liquide ionique chlorure de trihexyl(tetradécyl) phosphonium (P₆₆₆₁₄Cl, 95%, Iolitec) sont dilués dans 20mL de dichlorométhane (99.8%, Sigma-Aldrich) et passés à 3 reprises dans une colonne en verre remplie de 10g de résines d'échange anionique chargée en ions OH⁻ (Amberlite IRN78 OH hydroxide form, Sigma-Aldrich) au goutte à goutte. Le dichlorométhane est ensuite évaporé à l'évaporateur rotatif et un solide blanc est obtenu correspondant au liquide ionique hydroxyde de trihexyl(tetradécyl) phosphonium (P₆₆₆₁₄OH).

0,5 g de membrane PFSA Nafion 212 (produit par Chemours^{™}, et fourni par Fuel Cell Store), stockée à température ambiante (20 à 25°C) est plongée dans 3,1g de liquide ionique d'hydroxyde de trihexyl(tetradécyl) phosphonium (P₆₆₆₁₄OH). Le tout est ensuite chauffé à 120°C sous flux d'azote et agitation magnétique pendant 15 min jusqu'à obtenir un milieu visuellement homogène.

## Revendications

1. Procédé de recyclage de membranes ionomères d'acide perfluorosulfonique comprenant les étapes suivantes :
**1)** immerger, sous une atmosphère inerte, la membrane ionomère d'acide perfluorosulfonique dans un liquide ionique amphiphile (cation hydrophobe et anion hydrophile) dont
le cation est choisi parmi
- les 1-alkyl-3-méthylimidazoliums avec le radical alkyle ayant 8 à 14 atomes de carbone,
- les tétraalkylphosphoniums de formule P(R₁R₂R₃R₄)⁺ dans laquelle R₁, R₂, R₃ et R₄, identiques ou différents, représentent un radical alkyle ayant 4 à 14 atomes de carbone,
- les tributylalkylphosphoniums, avec le radical alkyle ayant 4 à 14 atomes de carbone,
- les trihexylalkylphosphoniums, avec le radical alkyle ayant 4 à 14 atomes de carbone, et
l'anion est choisi parmi Cl⁻, Br⁻, I⁻, BF₄⁻, PF₆⁻, TCM⁻ et OH⁻, de préférence Cl⁻, TCM⁻ et OH⁻, et plus préférentiellement OH⁻,
et chauffer le mélange membrane/liquide ionique à une température comprise entre 150 et 200°C, de préférence entre 160 et 180°C,
jusqu'à obtenir la dispersion de la membrane dans le liquide ionique ;
**2)** séparer l'ionomère d'acide perfluorosulfonique de la dispersion par précipitation en introduisant la dispersion dans un excès de solvant choisi parmi l'acétonitrile, l'acétate de butyle, et leur mélange ;
**3)** récupérer l'ionomère d'acide perfluorosulfonique précipité, éventuellement le laver avec le solvant de précipitation, et le sécher à une température comprise entre 20°C et 150°C ;
**4)** acidifier le l'ionomère d'acide perfluorosulfonique pour régénérer les fonctions SO₃H en l'introduisant dans une solution de 0,01 à 2M d'un acide minéral choisi parmi H₂SO₄, HCl, HNO₃, H₃PO₄et leur mélange ;
**5)** procéder au recuit de l'ionomère d'acide perfluorosulfonique récupéré à une température allant de 120 à 200°C.

2. Procédé selon la revendication 1, **caractérisé en ce que** le cation est parmi
les 1-alkyl-3-méthylimidazoliums choisis parmi 1-éthyl-3-méthylimidazolium (EMIM), 1-butyl-3-méthylimidazolium (BMIM), 1-hexyl-3-méthylimidazolium (HMIM), 1-octyl-3-méthylimidazolium (OMIM),1-décyl-3-méthylimidazolium (DMIM) ;
les tétraalkylphosphoniums choisis parmi [(C₄H₉)₃(C₁₄H₂₉)P]⁺, [(C₈H ₁₇)₄P]⁺, [(C₆H₁₃)₃(C₁₄H₂₉)P]⁺;
les tributylalkylphosphoniums choisis parmi tributyl(tétradécyl)phos phonium ;
les trihexylalkylphosphoniums choisis parmi trihexyl(octyl) phosphonium, trihexyl(tétradécyl)phosphonium.

3. Procédé selon l'une des revendications 1 ou 2, **caractérisé en ce que** dans l'étape **1),** le temps d'immersion est de 10 minutes à 14 heures.

4. Procédé selon l'une quelconque des revendications 1 à 3, **caractérisé en ce que** l'étape **1)** est réalisée préférentiellement sous atmosphère inerte (azote et/ou argon).

5. Procédé selon l'une quelconque des revendications 1 à 4, **caractérisé en ce que** dans l'étape **3)** préalablement au séchage, l'ionomère d'acide perfluorosulfonique précipité est lavé une ou plusieurs fois, avec 1 à 100 ml de solvant utilisé pour la précipitation par gramme de PFSA.

6. Procédé selon l'une quelconque des revendications 1 à 5, **caractérisé en ce que** dans l'étape **3),** le séchage a lieu sous un vide allant de la pression atmosphérique à 1 mbar.

7. Procédé selon l'une quelconque des revendications 1 à 6, **caractérisé en ce que** dans l'étape **4),** 1 à 100 ml de solution acide par gramme de PFSA est utilisé.

8. Procédé selon l'une quelconque des revendications 1 à 7, **caractérisé en ce que** dans l'étape **4),** la température d'acidification est de 20 à 80°C.

9. Procédé selon l'une quelconque des revendications 1 à 8, **caractérisé en ce que** dans l'étape **4),** le temps d'acidification est de 1 minute à 24 heures.

10. Procédé selon l'une quelconque des revendications 1 à 9, **caractérisé en ce que** dans l'étape **5),** la durée du recuit est de 30 minutes à 6 heures.
